# EUROPEAN PATENT APPLICATION

(11) **EP 3 637 270 A1**
(43) Date of publication of application: **15.04.2020**
(21) Application number: 19197593.7
(22) Date of filing: 16.09.2019
(51) Int. Cl.: G06F 13/38, G06F 13/40

(54) **EXTERNAL ELECTRICAL CONNECTOR AND COMPUTER SYSTEM**

(30) Priority: 12.10.2018 TW 107135896
(71) Applicant: Giga-Byte Technology Co., Ltd., New Taipei City 231 (TW)
(72) Inventor: CHEN, Hung-Cheng, 231 New Taipei City (TW); LIAO, Tse-Hsien, 231 New Taipei City (TW); KE, Chih-Hua, 231 New Taipei City (TW)
(74) Representative: Emde, Eric

(57) **Abstract**

An external electrical connector includes a carrier and a plurality of pins disposed on the carrier. The pins support at least two kinds of PCI-E, USB, HDMI, and DP interfaces, and a part of the pins are selectively transmitting at least two kinds of PCI-E, USB, HDMI, and DP signals. A computer system is further provided.

## Description

### BACKGROUND OF THE INVENTION

### Field of the Invention

The invention is related to an electrical connector and a computer system, and more particularly, to an external electrical connector and a computer system.

### Description of Related Art

Over the years, the architecture of computers has continued to evolve in response to the needs of users, and the specifications of connectors used in computers have continued to be updated due to the increase in the amount of data transmitted. However, the architecture of the home computer has not changed much, regardless of extending the motherboard from the standard ATX (Advanced Technology Extended) specification to the E-ATX specification to meet user needs for the workstation or reducing to the Mini-ITX specification to meet consumer needs at home, the computer always has one or several motherboards installed in one casing. If expansion is to be made via internal expansion equipment, the size of the casing is a limiting factor, and internal expansion equipment that may be placed in the casing needs to be selected to be installed on the motherboard. If expansion is to be made via external expansion equipment, the kind of the external connectors in current computer architectures is a limiting factor, such that expandability is limited.

### SUMMARY OF THE INVENTION

The invention provides an external electrical connector that supports at least two kinds of PCI-E, USB, HDMI, and DP interfaces, and provides better expandability.

The invention provides a computer system having the external electrical connector.

An external electrical connector of the invention includes a carrier and a plurality of pins disposed on the carrier. The pins support at least two kinds of PCI-E, USB, HDMI, and DP interfaces, and a part of the pins are selectively transmitting at least two kinds of PCI-E, USB, HDMI, and DP signals.

A computer system of the invention includes a motherboard module. The motherboard module includes a motherboard body and the external electrical connector. The motherboard body includes at least two of a PCI-E controller, a USB controller, an HDMI controller, and a DP controller. The external electrical connector is disposed on the motherboard body and electrically connected to the at least two of the PCI-E controller, the USB controller, the HDMI controller, and the DP controller.

In an embodiment of the invention, the computer system further includes a first external expansion device including at least one of a PCI-E controller, a USB controller, an HDMI controller and a DP controller and at least one external electrical connector, the at least one external electrical connector is electrically connected to the at least one of the PCI-E controller, the USB controller, the HDMI controller and the DP controller of the first external expansion device, and the external electrical connector of the first external expansion device is electrically connected to the external electrical connector disposed on the motherboard body.

In an embodiment of the invention, the computer system further includes a second external expansion device including at least one of a PCI-E controller, a USB controller, an HDMI controller, and a DP controller and at least one external electrical connector, the at least one external electrical connector of the first external expansion device includes two external electrical connectors, one of the external electrical connectors of the first external expansion device is electrically connected to the external electrical connector disposed on the motherboard, and the other external electrical connector of the first external expansion device is electrically connected to the external electrical connector of the second external expansion device.

In an embodiment of the invention, a part of the pins support a PCI-E x16 interface.

In an embodiment of the invention, a part of the pins are selectively used to transmit PCI-E or DP signals.

In an embodiment of the invention, a part of the pins are selectively used to transmit PCI-E or HDMI signals.

In an embodiment of the invention, the pins include 14 USB signal pins and 72 PCI-E x16 signal pins.

In an embodiment of the invention, in the 72 PCI-E x16 signal pins, 8 of the pins are selectively used as HDMI signal pins and are selectively used to transmit PCI-E or HDMI signals, the pins also include 4 HDMI signal pins, and the 8 pins transmit the HDMI signals together with the 4 HDMI signal pins.

In an embodiment of the invention, in the 72 PCI-E x16 signal pins, 8 of the pins are selectively used as DP signal pins and are selectively used to transmit PCI-E or DP signals, the pins also include 4 DP signal pins, and the 8 pins transmit the DP signals together with the 4 DP signal pins.

In an embodiment of the invention, the pins at least include 148 pins.

In an embodiment of the invention, the pins support PCI-E and USB interfaces, and the pins used to transmit the USB signal are located between the pins used to transmit the PCI-E signal.

In an embodiment of the invention, the pins include a plurality of pairs of high-speed signal pins, a plurality of ground pins, and a plurality of power pins, and one of the ground pins or one of the power pins is disposed between two adjacent pairs high-speed signal pins of the pairs of high-speed signal pins to shield a signal transmitted by the two adjacent pairs high-speed signal pins.

Based on the above, the pins of the external electrical connector of the invention support at least two kinds of PCI-E, USB, HDMI, and DP interfaces, and may be inserted by a wider variety of external expansion devices. In addition, a part of the pins of the external electrical connector of the invention are used to transmit at least two kinds of PCI-E, USB, HDMI, and DP signals, thus reducing the number of pins, such that the external electrical connector has a smaller size.

In order to make the aforementioned features and advantages of the disclosure more comprehensible, embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A is a schematic diagram of pins of an external electrical connector in accordance with an embodiment of the invention.
FIG. 1B is an enlarged schematic diagram of a part of the pins of FIG. 1A.
FIG. 1C is an enlarged schematic diagram of the other part of the pins of FIG. 1A.
FIG. 2 is a schematic diagram of a motherboard module of a computer system in accordance with an embodiment of the invention.
FIG. 3 is a schematic diagram of the computer system of FIG. 2.
FIG. 4 is the schematic diagram of a computer system in accordance with another embodiment of the invention.

### DESCRIPTION OF THE EMBODIMENTS

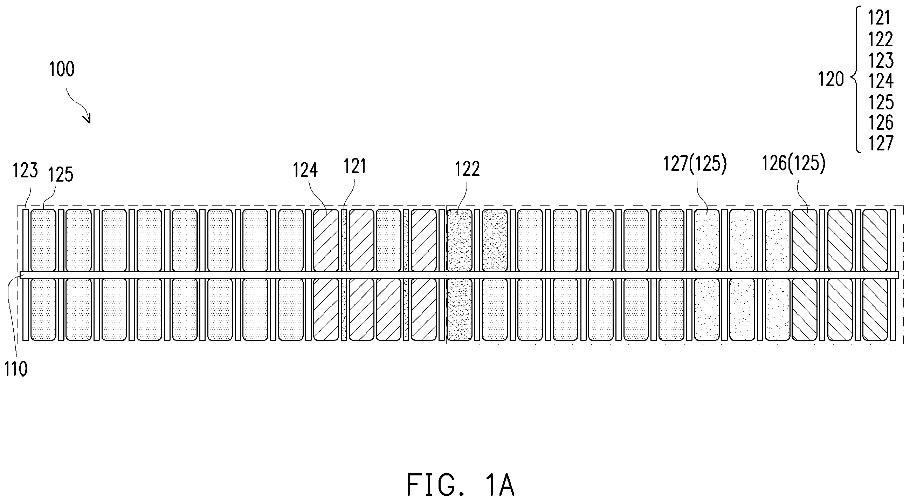

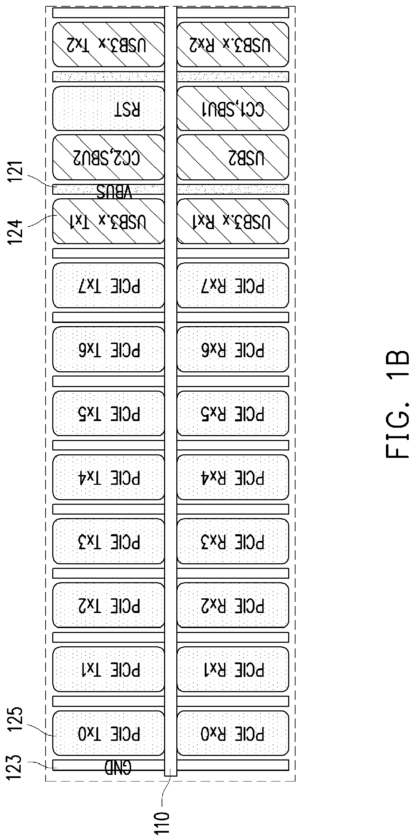

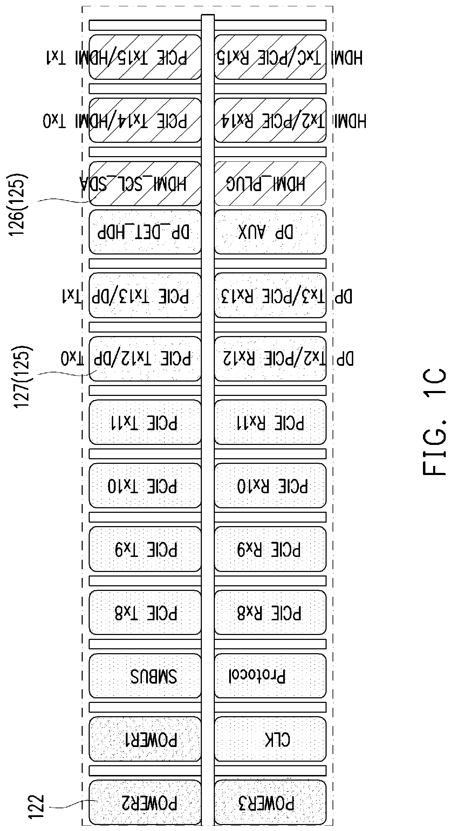

FIG. 1A is a schematic diagram of pins of an external electrical connector in accordance with an embodiment of the invention. FIG. 1B is an enlarged schematic diagram of a part of the pins of FIG. 1A. FIG. 1C is an enlarged schematic diagram of the other part of the pins of FIG. 1A.

Referring to FIG. 1A to FIG. 1C, an external electrical connector 100 of the present embodiment includes a carrier 110 and a plurality of pins 120 disposed on the carrier 110. In the present embodiment, the carrier 110 is, for example, an insulating layer of a circuit board, but the kind of the carrier 110 is not limited thereto. In other embodiments, the carrier 110 may also be an insulating plastic block or the like. In the present embodiment, in order to reduce the size of the external electrical connector 100, the pins are disposed on opposite sides of the carrier 110. Of course, in other embodiments, if the size of the external electrical connector 100 is not limited, the pins 120 may also be disposed on the same side of the carrier 110.

The pins 120 of the external electrical connector 100 support at least two kinds of PCI-E (PCI Express), USB (Universal Serial Bus), HDMI (High Definition Multimedia Interface), and DP (Display Port) interfaces, and a part of the pins 120 are selectively used to transmit at least two kinds of PCI-E, USB, HDMI, and DP signals.

In detail, in the present embodiment, the pins 120 support the four PCI-E, USB, HDMI, and DP interfaces. As seen from FIG. 1A, from left to right, the pins 120 of the external electrical connector 100 include a plurality of PCI-E signal pins 125, a plurality of USB signal pins 124, a plurality of DP signal pins 127, and a plurality of HDMI signal pins 126. In the present embodiment, a part of the pins 120 support the PCI-E x16 interface. More specifically, the PCI-E signal pins 125 may transmit the PCI-E x16 signal. A part of the PCI-E signal pins 125 (e.g., the PCI-E signal pin 125 near the far right) may also be selectively used as the HDMI signal pins 126 to transmit the PCI-E or HDMI signals. Moreover, a part of the PCI-E signal pins 125 (e.g., the PCI-E signal pin 125 near the right) may also be selectively used as the DP signal pins 127 to transmit the PCI-E or DP signals.

In addition, in the present embodiment, since the external electrical connector 100 supports the PCI-E x16 signal, the PCI-E x16 interface may need to supply different voltages of 12 V, +3.3 V, and +3.3 Vaux. Therefore, in the present embodiment, power pins 122 include three sets of POWER pins, which may respectively supply three different voltages. One of the three sets of power pins 122 may also support the DP interface, and another set of the power pins 122 may also support the HDMI interface. Therefore, the power pins 122 may support the power of PCI-E x16, DP, HDMI with only three sets, and therefore the number of power pins is less.

In the present embodiment, at least a part of the ground pins 123 may be selectively used for any two of the four PCI-E, USB, HDMI, and DP interfaces. Therefore, in other embodiments, if the pins of the external electrical connector only support the two PCI-E and USB interfaces, at least a part of the ground pins 123 are also selectively used for the two interfaces.

In addition, as shown in FIG. 1A, in the present embodiment, the PCI-E signal pins 125 are located on the left side and the right side, and the USB signal pins 124 are located between the PCI-E signal pins 125. Of course, the relative positions of the PCI-E signal pins 125, the USB signal pins 124, the DP signal pins 127, and the HDMI signal pins 126 are only one of the possibilities, and are not limited by the figures.

It is worth mentioning that in FIG. 1A to FIG. 1C, in order to avoid too many pins 120 from complicating the figures, the positive and negative pins transmitting the same kind of signal are schematically represented by the same pin having a larger width. For example, the pins having a larger width in FIG. 1A include a PCI-E signal pin 125, a USB signal pin 124, a power pin 122, a DP signal pin 127, and an HDMI signal pin 126 from left to right. Each of the pins includes two pins transmitting a positive signal and a negative signal. Further, in FIG. 1A to FIG. 1C, each of the pins having a smaller width (for example, the ground pins 123 and the power pins 121) represents one pin. Therefore, as may be seen from FIG. 1A, in the present embodiment, the external electrical connector 100 has 148 pins. Of course, in other embodiments, the number of pins varies depending on the kind of interface supported by the pins, and is not limited to the above.

In the present embodiment, the 148 pins include 72 PCI-E signal pins 125 (including 48 dedicated PCI-E signal pins 125, 6 sets (12 total) of pins shared with HDMI, and 6 sets (12 total) of pins shared with DP), 14 USB signal pins 124, 44 ground pins 123, 10 power pins 121 and 122 (including 3 sets (6 total) of POWER pins 122 and 4 VBUS pins 121, wherein the VBUS pins are charging pins defined in USB 3.x), four dedicated HDMI signal pins 126, and four dedicated DP signal pins 127.

In the present embodiment, in the 72 PCI-E signal pins 125, 8 of the pins on the right may be selectively used as the HDMI signal pins 126 and be selectively used to transmit the PCI-E or HDMI signals. That is to say, when the external electrical connector 100 is to transmit the PCI-E signals, the eight HDMI and PCI-E common pins are used to transmit a part of the PCI-E x16 signals. When the external electrical connector 100 is to transmit the HDMI signals, the eight HDMI and PCI-E common pins transmit the HDMI signals together with the four HDMI signal pins 126.

In addition, in the present embodiment, in the 72 PCI-E signal pins 125, the 8 pins located at the rightmost side may be selectively used as the DP signal pins 127 and be selectively used to transmit the PCI-E or DP signals. That is to say, when the external electrical connector 100 is to transmit the PCI-E x16 signals, the eight DP and PCI-E common pins are used to transmit a part of the PCI-E x16 signals. When the external electrical connector 100 is to transmit the DP signals, the eight DP and PCI-E common pins transmit the DP signals together with the four DP signal pins 127.

Of course, the number and function of the pins are not limited thereto. In other embodiments, the external electrical connector may also have at least 148 pins, such as having 160 pins. The 160 pins may include the 148 pins plus 12 additional pins, and the 12 additional pins may be a combination of ground pins and power pins.

It should be noted that in the present embodiment, the ground pins 123 have a function of shielding signals transmitted from pins on the left and right sides in addition to a ground function. Therefore, in the present embodiment, in the pins having a larger width (a pin having a larger width is a pair of high-speed signal pins), a pin having a smaller width (for example, a ground pin 123 or a power pint 121) is disposed between two adjacent ones to reduce the probability of high-speed signals interfering with each other. Thus, as may be seen in FIG. 1A, the configuration of the pins 120 is in the form of a wide and narrow stagger. Of course, the thickness in the figures only indicates two or one pin 120. In actuality, the thickness of the pins 120 is not limited to the figures.

In the present embodiment, the external electrical connector 100 is provided with pins 120 that support, for example, at least two of PCIE x16, USB 3.2, HDMI, and DP interfaces. Therefore, the external electrical connector 100 may be connected to the expansion device having the corresponding interface, so that the expansion capability of the external electrical connector 100 is significantly greater than the conventional connector. More specifically, the external electrical connector 100 may be connected by an expansion device that transmits in PCIE x16 form, an expansion device that transmits in USB form, an expansion device that transmits in HDMI form, and an expansion device that transmits in DP form. Therefore, a single external electrical connector 100 may be used with the expansion devices of the interfaces without the need to provide four specific electrical connectors, and since a part of the pins 120 are shared, the external electrical connector 100 may have a smaller size.

Computer systems 10 and 10a and motherboard modules 20 and 20a applied in the external electrical connector 100 of the present embodiment are described below.

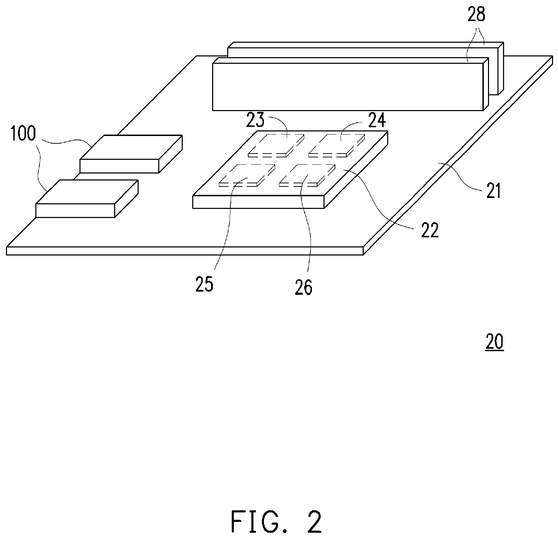

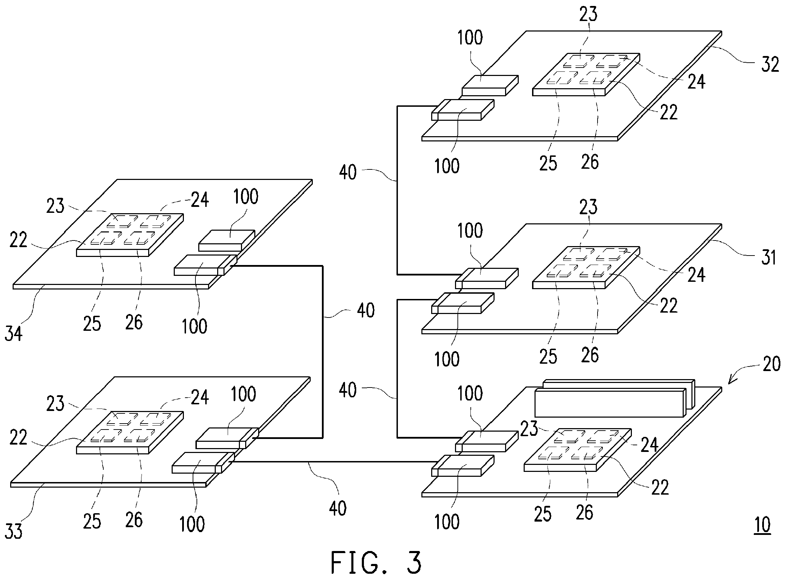

FIG. 2 is a schematic diagram of a motherboard module of a computer system in accordance with an embodiment of the invention. Referring to FIG. 2, the computer system 10 (Fig.3) of the present embodiment includes a motherboard module 20. The motherboard module 20 includes a motherboard body 21, at least one external electrical connector 100 disposed on the motherboard body 21, and at least one memory 28. The pins 120 of the external electrical connector 100 illustrated in FIG. 1A are the pins in the external electrical connector 100 of FIG. 2.

The motherboard body 21 includes a chip 22. The chip 22 is, for example, a north bridge chip, a south bridge chip, a PCH, or a CPU, and the kind of the chip 22 is not limited thereto. The chip 22 includes at least two of a PCI-E controller 23, a USB controller 24, an HDMI controller 25 and a DP controller 26. The external electrical connector 100 is disposed on the motherboard body 21 and electrically connected to the at least two of the PCI-E controller 23, the USB controller 24, the HDMI controller 25 and the DP controller 26 such that the external electrical connector 100 may support at least two kinds of PCI-E, USB, HDMI, and DP interfaces.

More specifically, in the present embodiment, the chip 22 includes the PCI-E controller 23, the USB controller 24, the HDMI controller 25 and the DP controller 26, and the external electrical connector 100 is electrically connected to the PCI-E controller 23, the USB controller 24, the HDMI controller 25, and the DP controller 26 on the motherboard body 21 to support the PCI-E, USB, HDMI, and DP interfaces. Therefore, the motherboard module 20 having the external electrical connector 100 has a strong external expansion capability, and may meet the needs of users via strong expandability.

For example, since the external electrical connector 100 has the functions of USB 3.2 and DP, if the external expansion device connected to the external electrical connector 100 is a USB or DP interface, functions such as charging and hot swapping may be supported. In addition, the external expansion device connected to the external electrical connector 100 may also be a PCI-E architecture. Therefore, common external expansion devices of the PCI-E architecture include, for example, display, sound effect, disk array, network, etc., which may all be connected to the motherboard module 20 via the external electrical connector 100.

Such a motherboard module 20 may even bypass internal expansion capabilities without the need to provide too many internal connectors or slots. More specifically, in the conventional motherboard module, there are many internal connectors or slots to be inserted by the internal devices disposed in the casing. Therefore, the sizes of the conventional motherboard module and casing may not be readily reduced due to the necessity of the internal connectors or slots. In the motherboard module 20 of the present embodiment, the internal connectors or slots may be replaced by the external electrical connector 100. In this way, since the expansion device is not directly disposed above the motherboard module 20 and inside the casing, the size of the motherboard module 20 itself may be miniaturized, and the casing for loading the motherboard module 20 may also be miniaturized.

In the present embodiment, the external electrical connector 100 of the motherboard module 20 may support PCI-E x16, USB, HDMI, and DP interfaces, and therefore has a powerful bandwidth and has an external expansion form. This property is suitable for connecting a large number of cooperative external expansion devices. In particular, the external expansion devices with cooperative computing capability do not actually require a high transmission bandwidth. At present, the bandwidth required for a part of the cooperative external expansion devices is even more than the PCIE x1 bandwidth. Therefore, the motherboard module 20 of the present embodiment may be connected to a large number of cooperative external expansion devices to fully utilize all transmission bandwidths of the external electrical connector 100.

FIG. 3 is a schematic diagram of the computer system of FIG. 2. Referring to FIG. 3, in the present embodiment, in addition to the motherboard module 20 of FIG. 2, the computer system 10 further includes a first external expansion device 31, a second external expansion device 32, a third external expansion device 33, and a fourth external expansion device 34. In the present embodiment, each of the first external expansion device 31, the second external expansion device 32, the third external expansion device 33, and the fourth external expansion device 34 includes at least one of the PCI-E controller 23, the USB controller 24, the HDMI controller 25 and the DP controller 26 and at least one of the external electrical connector 100. The external electrical connector 100 is electrically connected to the at least one of the PCI-E controller 23, the USB controller 24, the HDMI controller 25, and the DP controller 26 on its own external expansion device.

For example, in the present embodiment, the first external expansion device 31, the second external expansion device 32, the third external expansion device 33, and the fourth external expansion device 34 all include the chip 22 having the PCI-E controller 23, the USB controller 24, the HDMI controller 25 and the DP controller 26 to support the PCI-E, USB, HDMI and DP interfaces. Of course, the first external expansion device 31, the second external expansion device 32, the third external expansion device 33, and the fourth external expansion device 34 may also include only a part of the controllers, and the configuration is not limited by the figures.

As shown in FIG. 3, in the present embodiment, the motherboard module 20 includes two external electrical connectors 100, and the first external expansion device 31 also includes two external electrical connectors 100. One of the external electrical connectors 100 of the first external expansion device 31 is electrically connected to one of the external electrical connectors 100 disposed on the motherboard body 21 via a transmission line 40, and the other of the external electrical connectors 100 of the first external expansion device 31 is electrically connected to the external electrical connector 100 of the second external expansion device 32 via the transmission line 40.

Moreover, one of the external electrical connectors 100 of the third external expansion device 33 is electrically connected to another of the external electrical connectors 100 disposed on the motherboard body 21 via the transmission line 40, and the other of the external electrical connectors 100 of the third external expansion device 33 is electrically connected to the external electrical connector 100 of the fourth external expansion device 34 via the transmission line 40.

It should be noted that, in an embodiment, in the case that all of the external expansion devices transmit in PCI-E form, the chip 22 of the motherboard module 20 supports two sets of PCI-E x16 bandwidths such that each of the external electrical connectors 100 supports the PCI-E x16 bandwidth. The two external electrical connectors 100 of the motherboard module 20 are respectively available as first layer expansions for the first external expansion device 31 and the third external expansion device 33. Since the transmission bandwidth actually required by the external expansion device is not high, in the first layer expansion, the first external expansion device 31 and the third external expansion device 33 may each use only the PCIE x1 bandwidth. In other words, the PCI-E x16 bandwidth of the external electrical connector 100 of the motherboard module 20 is not fully utilized. Therefore, the first external expansion device 31 and the third external expansion device 33 may also be expanded by a second layer (that is, the second external expansion device 32 and the fourth external expansion device 34).

Similarly, the second external expansion device 32 and the fourth external expansion device 34 may also each use only the PCIE x1 bandwidth. The PCI-E x16 bandwidth of the external electrical connector 100 of the motherboard module 20 is still not fully utilized. Therefore, the second external expansion device 32 and the fourth external expansion device 34 may further be expanded by a third-layer external expansion device. Therefore, the motherboard module 20 of the present embodiment may be further connected to a large number of external expansion devices to utilize all of the transmission bandwidths supported by the chip 22 of the motherboard module 20 as much as possible.

Compared with the conventional motherboard module in which one internal connector or slot may only be used by one internal device or one external connector may only be used by one external device, each of the external electrical connectors 100 on the motherboard module 20 of the present embodiment may be connected to a large number of external expansion devices in a manner similar to a series connection to fully utilize the bandwidth of each of the external electrical connectors 100 on the motherboard module 20.

In addition, in an embodiment, the external expansion devices of different layers may also be of different interfaces. For example, the first external expansion device 31 is, for example, an external display card that transmits in PCI-E form, the second external expansion device 32 is, for example, an external hard disk that transmits in HDMI form, the third external expansion device 33 is, for example, a screen that transmits in DP form, and the fourth external expansion device 34 is, for example, a keyboard or a mouse that transmits in USB form.

In such an embodiment, the chip 22 in the first external expansion device 31 may support the PCI-E x16 bandwidth and the HDMI bandwidth. Therefore, a set of PCI-E x16 bandwidths from the external electrical connector 100 of the motherboard module 20 may be processed by the chip 22 of the first external expansion device 31 into a set of PCI-E x16 bandwidths and a set of HDMI bandwidths. The first external expansion device 31 itself uses the PCI-E x16 bandwidth, and the first external expansion device 31 may also provide the HDMI bandwidth to the second external expansion device 32.

Similarly, the chip 22 in the third external expansion device 33 may support a DP bandwidth and a USB bandwidth. Therefore, a set of DP bandwidths from the external electrical connector 100 of the motherboard module 20 may be processed by the chip 22 of the third external expansion device 33 into a set of DP bandwidths and a set of USB bandwidths. The third external expansion device 33 itself uses the DP bandwidth, and the third external expansion device 33 may also provide the USB bandwidth to the fourth external expansion device 34.

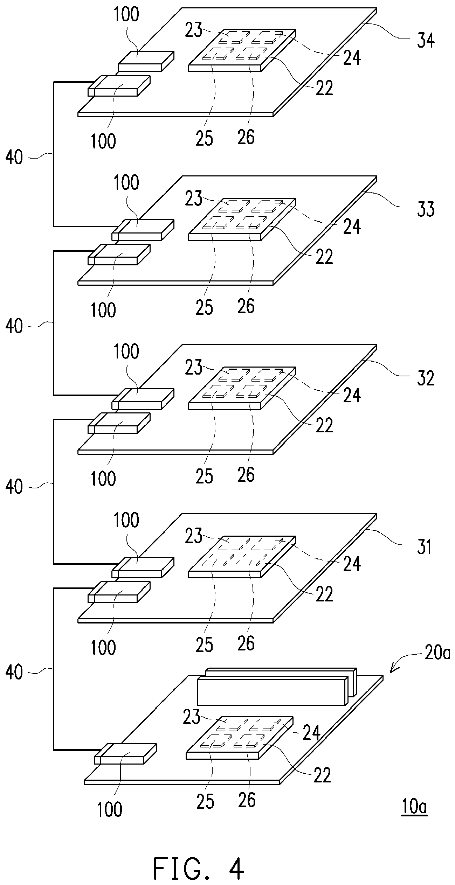

FIG. 4 is the schematic diagram of a computer system in accordance with another embodiment of the invention. Referring to FIG. 4, the difference between a computer system 10a of FIG. 4 and the computer system 10 of FIG. 3 is that, in FIG. 3, the motherboard module 20 has two external electrical connectors 100, and the first external expansion device 31 and the third external expansion device 33 are connected to the motherboard module 20 in a manner similar to parallel connection.

In FIG. 4, a motherboard module 20a may have only a single external electrical connector 100. The external electrical connector 100 of the first external expansion device 31 is electrically connected to the external electrical connector 100 of the motherboard module 20a via the transmission line 40. The external electrical connector 100 of the second external expansion device 32 is electrically connected to the external electrical connector 100 of the first external expansion device 31 via the transmission line 40. The external electrical connection 100 of the third external expansion device 33 is electrically connected to the external electrical connector 100 of the second external expansion device 32 via the transmission line 40. The external electrical connector 100 of the fourth external expansion device 34 is electrically connected to the external electrical connector 100 of the third external expansion device 33 via the transmission line 40.

That is, in FIG. 4, the external expansion device is connected to the motherboard module 20a in a manner similar to a series connection. Similarly, since the chip 22 of the external expansion devices supports at least one of PCI-E, USB, HDMI, and DP interfaces, and the transmission bandwidth actually required by the external expansion devices is not high, a plurality of external expansion devices may be connected in series to fully utilize the transmission bandwidth supported by the chip 22 of the motherboard module 20 as much as possible.

Based on the above, the pins of the external electrical connector of the invention support at least two kinds of PCI-E, USB, HDMI, and DP interfaces, and may be inserted by more external expansion devices. In addition, a part of the pins of the external electrical connector of the invention are used to transmit at least two kinds of PCI-E, USB, HDMI, and DP signals, thus reducing the number of pins, such that the external electrical connector has a smaller size. In the computer system of an embodiment of the invention, the external electrical connectors are disposed on the motherboard module and the external expansion device such that each external electrical connector on the motherboard module may be connected to a plurality of external expansion devices to sufficiently utilize the transmission bandwidths to achieve good external expandability.

## Claims

1. An external electrical connector (100), comprising:
a carrier (110); and
a plurality of pins (120) disposed on the carrier (110), wherein the pins (120) support at least two kinds of PCI-E, USB, HDMI, and DP interfaces, and a part of the pins (120) are selectively transmitting at least two kinds of PCI-E, USB, HDMI, and DP signals.

2. The external electrical connector (100) of claim 1, wherein a part of the pins (120) support a PCI-E x16 interface.

3. The external electrical connector (100) of any one of claims 1-2, wherein a part of the pins (120) are selectively used to transmit the PCI-E or DP signals.

4. The external electrical connector (100) of any one of claims 1-3, wherein a part of the pins (120) are selectively used to transmit the PCI-E or HDMI signals.

5. The external electrical connector (100) of any one of claims 1-4, wherein the pins (120) comprise 14 USB signal pins (124) and 72 PCI-E x16 signal pins (125).

6. The external electrical connector (100) of claim 5, wherein in the 72 PCI-E x16 signal pins (125), 8 of the pins (125) are selectively used as HDMI signal pins (126) and are selectively used to transmit the PCI-E or HDMI signals, the pins (120) also comprise 4 HDMI signal pins (126), and the 8 pins (125) transmit the HDMI signals together with the 4 HDMI signal pins (126).

7. The external electrical connector (100) of claim 5, wherein in the 72 PCI-E x16 signal pins (125), 8 of the pins (125) are selectively used as DP signal pins (127) and are selectively used to transmit the PCI-E or DP signals, the pins (125) also comprise 4 DP signal pins (127), and the 8 pins (125) transmit the DP signals together with the 4 DP signal pins (127).

8. The external electrical connector (100) of any one of claims 1-7, wherein the pins (120) at least comprise 148 pins.

9. The external electrical connector (100) of any one of claims 1-8, wherein the pins (120) support the PCI-E and USB interfaces, and the pins (124) used to transmit the USB signal are located between the pins (125) used to transmit the PCI-E signal.

10. The external electrical connector (100) of any one of claims 1-9, wherein the pins (120) comprise a plurality of pairs of high-speed signal pins, a plurality of ground pins (123), and a plurality of power pins (121, 122), and one of the ground pins (123) or one of the power pins (121, 122) is disposed between two adjacent pairs high-speed signal pins of the pairs of high-speed signal pins to shield a signal transmitted by the two adjacent pairs high-speed signal pins.

11. A computer system (10, 10a), comprising:
a motherboard module (20, 20a), comprising:
a motherboard body (21) comprising at least two of a PCI-E controller (23), a USB controller (24), an HDMI controller (25) and a DP controller (26); and
a first external electrical connector (100), comprising:
a first carrier (110); and
a plurality of first pins (120) disposed on the first carrier (110), wherein the first pins (120) support at least two kinds of PCI-E, USB, HDMI, and DP interfaces, and a part of the first pins (120) are selectively transmitting at least two kinds of PCI-E, USB, HDMI, and DP signals, wherein the first external electrical connector (100) is disposed on the motherboard body (21) and electrically connected to the at least two of the PCI-E controller (23), the USB controller (24), the HDMI controller (25), and the DP controller (26).

12. The computer system (10, 10a) of claim 11, further comprising:
a first external expansion device (31) comprising at least one of a PCI-E controller (23), a USB controller (24), an HDMI controller (25) and a DP controller (26) and at least one second external electrical connector (100), wherein each of the at least one second external electrical connector (100) comprises a second carrier (110); and a plurality of second pins (120) disposed on the second carrier (110), wherein the second pins (120) support at least two kinds of PCI-E, USB, HDMI, and DP interfaces, and a part of the second pins (120) are selectively transmitting at least two kinds of PCI-E, USB, HDMI, and DP signals, the at least one second external electrical connector (100) is electrically connected to the at least one of the PCI-E controller (23), the USB controller (24), the HDMI controller (25) and the DP controller (26) of the first external expansion device (31), and the second external electrical connector (100) of the first external expansion device (31) is electrically connected to the first external electrical connector (100) disposed on the motherboard body (21).

13. The computer system (10, 10a) of claim 12, further comprising:
a second external expansion device (32) comprising at least one of a PCI-E controller (23), a USB controller (24), an HDMI controller (25) and a DP controller (26) and at least one third external electrical connector (100), wherein each of the at least one third external electrical connector (100) comprises a third carrier (110); and a plurality of third pins (120) disposed on the third carrier (110), wherein the third pins (120) support at least two kinds of PCI-E, USB, HDMI, and DP interfaces, and a part of the third pins (120) are selectively transmitting at least two kinds of PCI-E, USB, HDMI, and DP signals, the at least one second external electrical connector (100) of the first external expansion device (31) comprises two second external electrical connectors (100), one of the second external electrical connectors (100) of the first external expansion device (31) is electrically connected to the first external electrical connector (100) disposed on the motherboard body (21), and the other of the second external electrical connectors (100) of the first external expansion device (31) is electrically connected to the third external electrical connector (100) of the second external expansion device (32).

14. The computer system (10, 10a) of any one of claims 11-13, wherein a part of the first pins (120) support a PCI-E x16 interface.

15. The computer system (10, 10a) of any one of claims 11-14, wherein a part of the first pins (120) are selectively used to transmit PCI-E or DP signals.

16. The computer system (10, 10a) of any one of claims 11-15, wherein a part of the first pins (120) are selectively used to transmit PCI-E or HDMI signals.

17. The computer system (10, 10a) of any one of claims 11-16, wherein the first pins (120) comprise 14 USB signal pins(124) and 72 PCI-E x16 signal pins (125).

18. The computer system (10, 10a) of claim 17, wherein in the 72 PCI-E x16 signal pins (125), 8 of the pins (125) are selectively used as HDMI signal pins (126) and are selectively used to transmit PCI-E or HDMI signals, the pins (120) also comprise 4 HDMI signal pins (126), and the 8 pins (125) transmit the HDMI signals together with the 4 HDMI signal pins (126).

19. The computer system (10, 10a) of claim 17, wherein in the 72 PCI-E x16 signal pins (125), 8 of the pins (125) are selectively used as DP signal pins (127) and are selectively used to transmit PCI-E or DP signals, the pins (120) also comprise 4 DP signal pins (127), and the 8 pins (125) transmit the DP signals together with the 4 DP signal pins (127).

20. The computer system (10, 10a) of any one of claims 11-19, wherein the first pins (120) at least comprise 148 pins.

21. The computer system (10, 10a) of any one of claims 11-20, wherein the first pins (120) support PCI-E and USB interfaces, and the first pins (120) used to transmit a USB signal are located between the first pins (120) used to transmit a PCI-E signal.

22. The computer system (10, 10a) of any one of claims 11-21, wherein the first pins (120) comprise a plurality of pairs of high-speed signal pins, a plurality of ground pins (123), and a plurality of power pins (121, 122), and one of the ground pins (120) or one of the power pins (121, 122) is disposed between two adjacent pairs high-speed signal pins of the pairs of high-speed signal pins to shield a signal transmitted by the two adjacent pairs high-speed signal pins.
